# EUROPÄISCHE PATENTANMELDUNG

(11) **EP 4 257 014 A1**
(43) Veröffentlichungstag der Anmeldung: **11.10.2023**
(21) Anmeldenummer: 22200276.8
(22) Anmeldetag: 07.10.2022
(51) Int. Cl.: A47J 36/38, A47J 36/06, A47J 27/00

(54) **TOPFANORDNUNG SOWIE KÜCHENMASCHINE**

(30) Priorität: 25.03.2022 DE 202022101600 U
(71) Anmelder: Wundermix GmbH, 85748 Garching b. München (DE)
(72) Erfinder: Die Erfindernennung liegt noch nicht vor
(74) Vertreter: Patentanwälte Bauer Vorberg Kayser

(57) **Zusammenfassung**

Die vorliegende Erfindung betrifft eine Topfanordnung, beispielsweise für eine Küchenmaschine, umfassend einen Topf (1) mit einer Topföffnung (2). Diese ist gekennzeichnet durch eine Aufsatzvorrichtung (3), die dazu ausgebildet ist, auf die Topföffnung (2) aufgesetzt zu werden, wobei die Aufsatzvorrichtung (3) eine Filtereinrichtung (4) zum Filtern von Stoffen, beispielsweise Dämpfen, Partikeln und/oder Geruchsstoffen aufweist, die Filtereinrichtung (4) umfassend eine mit einem Filtermedium (F) befüllbare Filterkammeranordnung (5), wobei die Filterkammeranordnung (5) eine Eintrittsöffnung (6) aufweist, die dazu ausgebildet ist, bei einer Verwendung der Topfanordnung in einer Kochanwendung, beispielsweise einem Kochvorgang eines in dem Topf (1) aufgenommenen Lebensmittels, bei der die Aufsatzvorrichtung (3) auf den Topf (1) aufgesetzt ist, Stoffe aus dem Topf (1) in einen durch die Filterkammeranordnung (5) gebildeten Filterraum (7) eintreten zu lassen und die Stoffe unter Einsatz des Filtermediums (F) zu filtern.

## Beschreibung

Die vorliegende Erfindung betrifft eine Topfanordnung sowie eine Küchenmaschine mit einer Topfanordnung.

Eine Topfanordnung kann einen Topf aufweisen. Töpfe weisen in der Regel eine an einem unteren Topfende angeordnete Topfbasis und einen sich an die Topfbasis anschließenden Topfmantel auf. Eine der Topfbasis gegenüberliegende Topföffnung des Topfes kann mit einem Topfdeckel abgedeckt werden. Der Topfdeckel kann zudem eine Einfüllöffnung aufweisen, welche einen geringeren Durchmesser als die Topföffnung aufweist. Letzteres ist häufig bei Töpfen zur Verwendung in Küchenmaschinen wie dem Thermomix^{®} der Fall.

Töpfe können zum Zubereiten von Lebensmitteln verwendet werden, beispielsweise zum Kochen, Garen, Dünsten, Braten, Frittieren oder dergleichen (Kochanwendungen). Auch können Töpfe zum Erhitzen von Flüssigkeiten wie Wasser, Öl etc. eingesetzt werden (ebenfalls Kochanwendungen). Dazu wird ein Topf in der Regel auf eine Energiequelle (z. B. eine Herdplatte) aufgesetzt und von unten geheizt. Sofern die Topföffnung des Topfes nicht mit einem Topfdeckel abgedeckt bzw. verschlossen ist, so können Dämpfe oder Gerüche oft ungehindert aus dem Topf aufsteigen und sich in der Umgebung verteilen. Dies kann zu ungewünschten Geruchsbelästigungen oder Dampfabsonderungen in der Umgebung führen. Denn bestimmte Lebensmittel oder Flüssigkeiten, sondern beim Kochen, Garen, Dünsten, Braten, Frittieren oder dergleichen unangenehme Gerüche ab. Gleichsam kann auch aufsteigender Wasserdampf an Küchenbauteilen in der Umgebung des Topfes kondensieren und sich dort in Form von flüssigem Wasser ansammeln. Dies kann bei metallischen Bauteilen zu ungewünschter Korrosion führen.

Mit einer Küchenmaschine können Kochprozesse, Backprozesse, oder allgemein Zubereitungsprozesse von Lebensmitteln automatisiert oder teilautomatisiert durchgeführt werden. Auch in Küchenmaschinen werden Töpfe zu den oben beschriebenen Zwecken eingesetzt. Häufig weisen in Küchenmaschinen verwendete Töpfe zusätzliche Funktionselemente wie rotierbare Messer oder dergleichen auf, die mit der Küchenmaschine zusammenwirken. Die beschriebene Problematik der Geruchsbelästigung und Wasserdampfkondensation in der Umgebung tritt auch bei in Küchenmaschinen verwendeten Töpfen auf.

Somit liegt der vorliegenden Erfindung die Aufgabe zugrunde, eine Topfanordnung und eine Küchenmaschine bereitzustellen, mit der geringere Geruchsbelästigungen gewährleistet werden und eine ungewünschte Wasserdampfkondensation in der Umgebung vermieden wird.

Zur Lösung dieser Aufgabe wird eine Topfanordnung mit den Merkmalen des Anspruchs 1 und eine Küchenmaschine mit den Merkmalen des Anspruchs 11 vorgesch lagen.

Es ist darauf hinzuweisen, dass die in den Ansprüchen einzeln aufgeführten Merkmale in beliebiger, technisch sinnvoller Weise miteinander kombiniert werden können (auch über Kategoriegrenzen hinweg) und weitere Ausgestaltungen der Erfindung aufzeigen. Die Beschreibung charakterisiert und spezifiziert die Erfindung insbesondere im Zusammenhang mit den Figuren zusätzlich.

Es sei ferner darauf hingewiesen, dass eine hierin verwendete, zwischen zwei Merkmalen stehende und diese miteinander verknüpfende Konjunktion "und/oder" stets so auszulegen ist, dass in einer ersten Ausgestaltung des erfindungsgemäßen Gegenstands lediglich das erste Merkmal vorhanden sein kann, in einer zweiten Ausgestaltung lediglich das zweite Merkmal vorhanden sein kann und in einer dritten Ausgestaltung sowohl das erste als auch das zweite Merkmal vorhanden sein können.

Die Erfindung betrifft zunächst eine Topfanordnung, beispielsweise für eine Küchenmaschine, umfassend einen Topf mit einer Topföffnung. Die Topfanordnung zeichnet sich aus durch eine Aufsatzvorrichtung, die dazu ausgebildet ist, auf die Topföffnung aufgesetzt zu werden. Dies kann gewichtskraftbasiert erfolgen, beispielsweise durch Aufliegen auf einem Topfdeckel oder einem oberen Rand des Topfes. Dadurch kann eine Befestigung zwischen Aufsatzvorrichtung und Topfdeckel bzw. Topf bereitgestellt werden, gleichsam aber auch durch anderweitige Befestigungsmittel. Die Aufsatzvorrichtung weist eine Filtereinrichtung zum Filtern von Stoffen, beispielsweise Dämpfen, Partikeln und/oder Geruchsstoffen auf. Die Filtereinrichtung umfasst eine mit einem Filtermedium befüllbare Filterkammeranordnung, wobei die Filterkammeranordnung eine Eintrittsöffnung aufweist, die dazu ausgebildet ist, bei einer Verwendung der Topfanordnung in einer Kochanwendung, beispielsweise einem Kochvorgang eines in dem Topf aufgenommenen Lebensmittels, bei der die Aufsatzvorrichtung auf den Topf aufgesetzt ist, Stoffe aus dem Topf in einen durch die Filterkammeranordnung gebildeten Filterraum eintreten zu lassen und die Stoffe unter Einsatz des Filtermediums zu filtern.

Das Filtermedium kann auch als Rückhalte oder Absorptionsmedium verstanden werden, welches Stoffe aufnimmt/auffängt bzw. absorbiert. Dadurch oder durch eine Filterung wird eine etwaige Geruchsbelästigung der Umgebung vermieden. Ferner kann aufsteigender Wasserdampf in der Filtereinrichtung angesammelt und/oder kondensiert werden und gegebenenfalls in den Topf zurückgeführt werden. Ein Aufsteigen von Wasserdampf nach außerhalb des Topfes wird somit samt einer damit einhergehenden ungewünschten Kondensation an Küchenkomponenten in der Umgebung vermieden. Wasserdampf kann auch von dem Filtermedium gebunden, absorbiert oder zurückgehalten werden.

Die Filterkammeranordnung bzw. die zugehörigen Filterkammern können derart angeordnet sein, dass bei über ein vorbestimmtes Maß hinausgehender Ansammlung von Flüssigkeit (z. B. in der Filtereinrichtung kondensierendem oder sich ansammelnden Wasser) ein Rücklauf der Flüssigkeit in Richtung des Topfes gewährleistet wird, zum Beispiel über die Eintrittsöffnung.

Weitere Ausgestaltungen der Erfindung sind in den Unteransprüchen angegeben.

So kann nach einer Ausgestaltung der Erfindung kann vorgesehen sein, dass die Aufsatzvorrichtung eine Druckausgleichsöffnung aufweist, wobei die Druckausgleichsöffnung bei auf den Topf aufgesetzter Aufsatzvorrichtung vorzugsweise an einer der Topföffnung gegenüberliegenden Seite der Aufsatzvorrichtung angeordnet ist. Es können auch mehrere Druckausgleichsöffnungen vorgesehen sein, die beispielsweise umlaufend auf einer Oberseite der Aufsatzvorrichtung angeordnet sind. Die mehreren Druckausgleichsöffnungen können jeweils die Form eines Langlochs, eines Rundlochs, eines polygonalen Lochs oder dergleichen aufweisen. Auch können die Druckausgleichsöffnungen schlitzartig ausgebildet sein.

Nach einer weiteren Ausgestaltung der Erfindung kann vorgesehen sein, dass die Filterkammeranordnung mindestens eine, vorzugsweise mehrere, mit Filtermedium befüllbare Filterkammer umfasst. Bei einer Kochanwendung (z. B. Kochen, Garen, Dünsten, Braten, Frittieren) ist die eine oder sind die mehreren Filterkammern vorzugsweise mit Filtermedium befüllt. Die Filterkammern können bis zu einem bestimmten Level mit Filtermedium befüllt sein, es muss also nicht das vollständige Volumen der einen oder mehreren Filterkammer(n) mit Filtermedium befüllt sein.

Nach einer weiteren Ausgestaltung der Erfindung kann vorgesehen sein, dass die Filterkammeranordnung zwei konzentrisch um die Eintrittsöffnung herum, und vorzugsweise in Radialrichtung hintereinander angeordnete Filterkammern umfasst.

Nach einer weiteren Ausgestaltung der Erfindung kann vorgesehen sein, dass das Filtermedium eine Flüssigkeit, ein Feststoff, ein Gel, oder eine Paste ist. Im einfachsten Fall kann das Filtermedium Wasser sein. Das Filtermedium kann auch ein wasserziehendes Medium sein, z. B. Silikagel oder Silikakugeln. Das Filtermedium kann aus einem Naturstoff, einem anorganischen oder organischen Stoff gebildet sein. Das Filtermedium kann synthetischer Natur sein. Das Filtermedium kann Zellstoff sein oder Zellstoff umfassen.

Nach einer weiteren Ausgestaltung der Erfindung kann vorgesehen sein, dass die Filterkammeranordnung eine Leitvorrichtung umfasst, die dazu eingerichtet ist, Stoffe aus dem Topf durch das Filtermedium zu leiten.

Nach einer weiteren Ausgestaltung der Erfindung kann vorgesehen sein, dass die Aufsatzvorrichtung durch ein oberes Teil und ein unteres Teil gebildet ist, wobei das untere Teil die mindestens eine Filterkammer bereitstellt und das obere Teil die Leitvorrichtung bereitstellt.

Nach einer weiteren Ausgestaltung der Erfindung kann vorgesehen sein, dass das obere Teil und das untere Teil separate Bauteile sind, oder dass das obere Teil und das untere Teil ein einteilig gefertigtes Bauteil bereitstellen. Im Falle einer separaten Ausbildung des oberen und unteren Teils, können diese Teile ineinander verschachtelbar sein.

Nach einer weiteren Ausgestaltung der Erfindung kann vorgesehen sein, dass die Leitvorrichtung mindestens eine Leitwand umfasst, die in die mindestens eine Filterkammer hineinragt. Die Leitwand kann aufsteigende Stoffe leiten.

Nach einer weiteren Ausgestaltung der Erfindung kann vorgesehen sein, dass die mindestens eine Filterkammer Kammerwände aufweist und die mindestens eine Leitwand zusammen mit den Kammerwänden einen labyrinthartigen Weg für die Stoffe aus dem Topf zwischen der Eintrittsöffnung und der Austrittsöffnung vorgeben.

Die Topfanordnung kann einen Topf umfassen, der eine an einem unteren Topfende angeordnete Topfbasis, einen sich an die Topfbasis anschließenden Topfmantel aufweist. Eine der Topfbasis gegenüberliegende Topföffnung kann mit einem Topfdeckel abgedeckt werden. Der Topfdeckel kann zudem eine Einfüllöffnung aufweisen, welche einen geringeren Durchmesser als die Topföffnung aufweist. Der Topf kann eine in dem Topf, insbesondere in Nähe der Topfbasis, angeordnete, unter Einsatz einer Antriebseinheit rotierbare Rotationseinheit aufweisen. Es kann erfindungsgemäß vorgesehen sein, dass die Eintrittsöffnung der Aufsatzvorrichtung fluchtend oder zumindest nahezu fluchtend zur Einfüllöffnung des Topfdeckels angeordnet ist.

Weiterhin betrifft die vorliegende Erfindung eine Küchenmaschine mit einer erfindungsgemäßen Topfanordnung.

Die vorgeschlagene Topfanordnung lässt sich - ohne bauliche Abwandlungen - mit Küchenmaschinen wie dem Thermomix^{®} verwenden. Die Verwendung ist nicht auf Küchenmaschinen wie den Thermomix^{®} beschränkt.

Die Erfindung wird weiterhin anhand der nachfolgenden Figuren näher erläutert. Diese sind nur beispielhaft zu verstehen und sollen die Erfindung nicht auf die gezeigten Ausführungsbeispiele beschränken.

Es zeigen:
- Fig. 1: eine teilgeschnittene Darstellung einer Topfanordnung nach einer Ausführungsform der Erfindung;

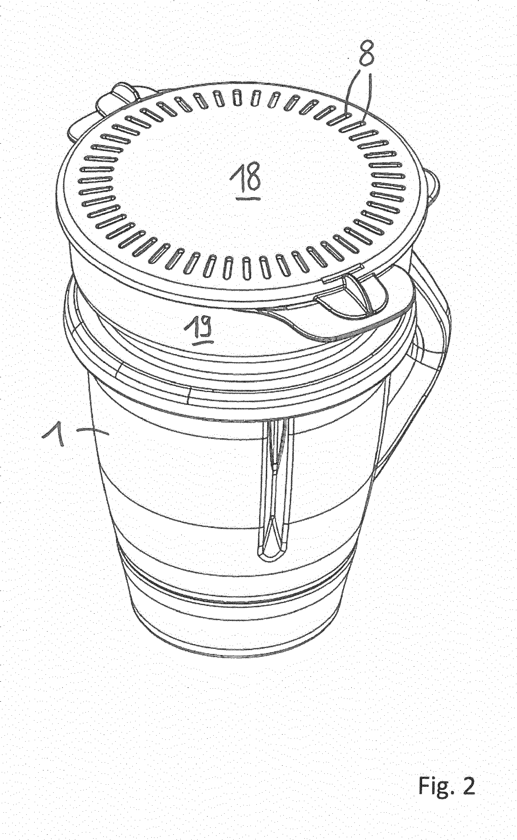

- Fig. 2: eine perspektivische Darstellung der Topfanordnung aus Fig. 1;

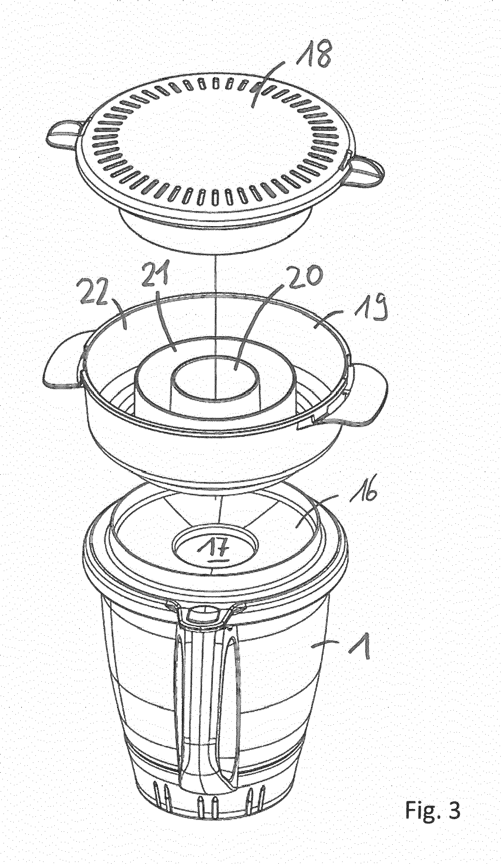

- Fig. 3: eine Darstellung wie in Fig. 2 in Explosionsdarstellung;

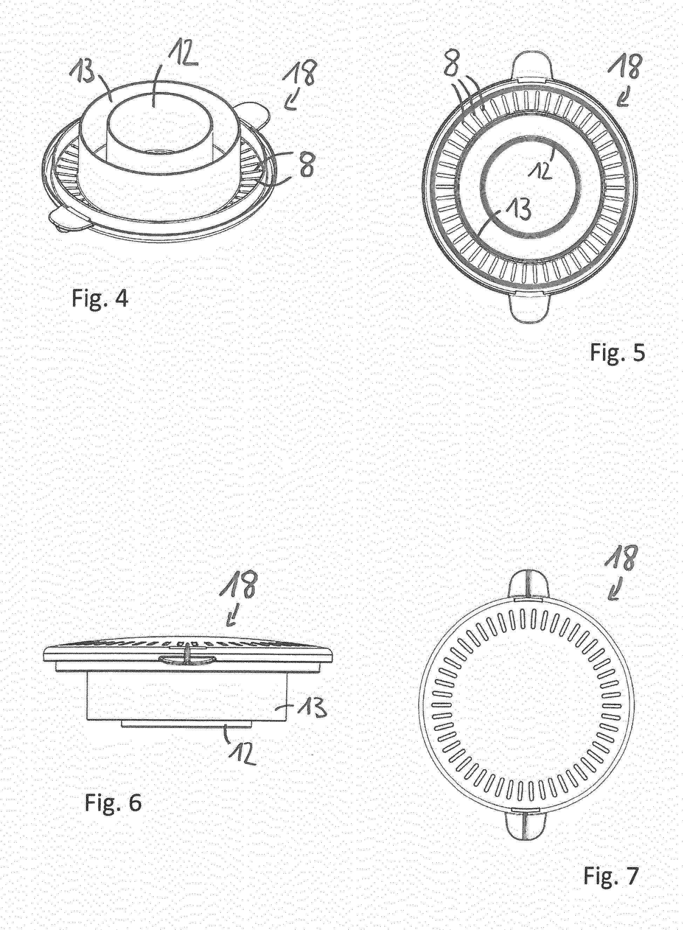

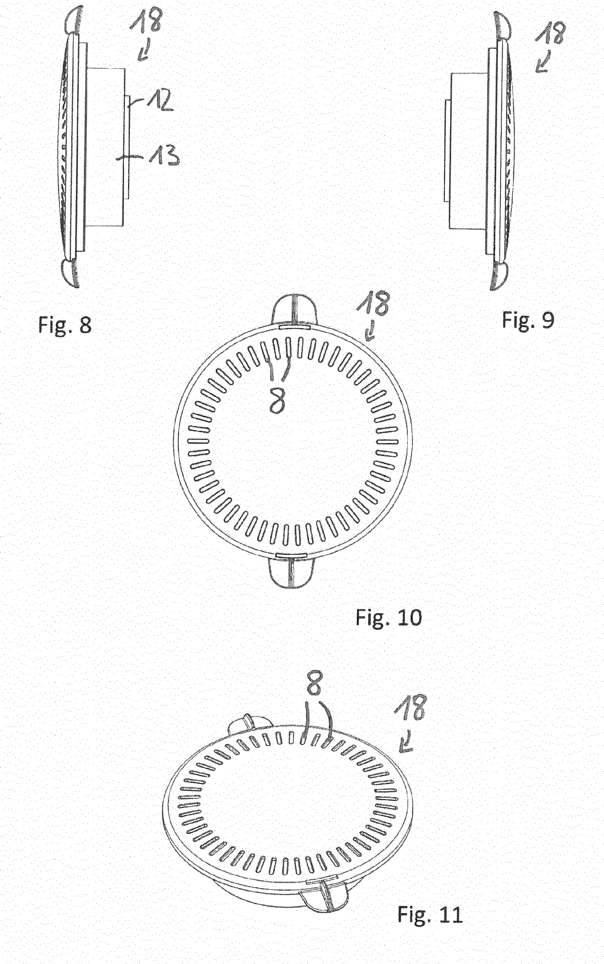

- Fig. 4 bis 11: den oberen Teil der Aufsatzvorrichtung in verschiedenen Ansichten;

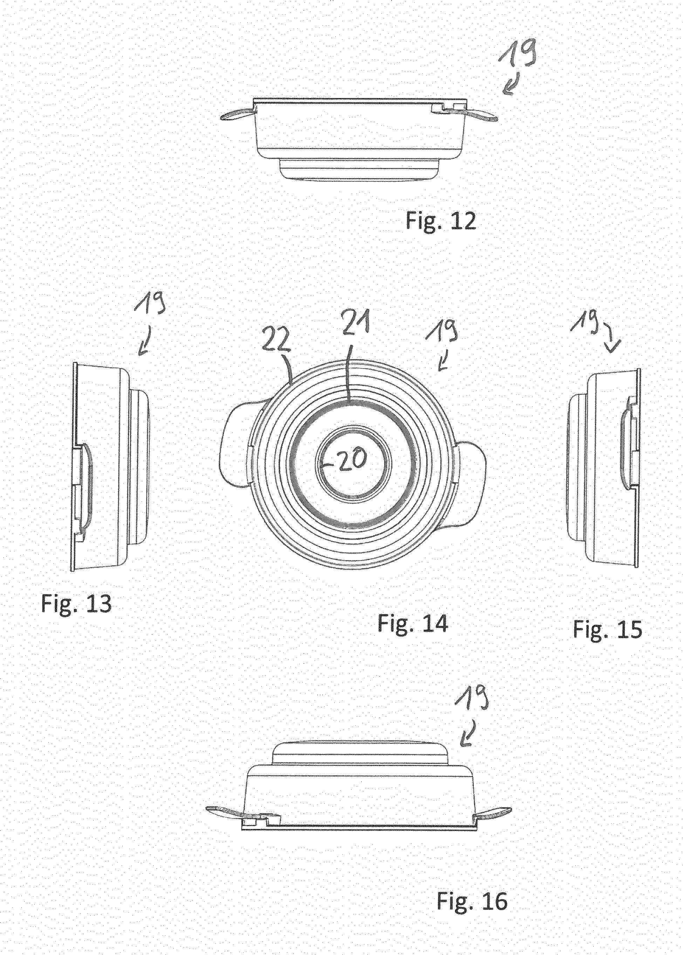

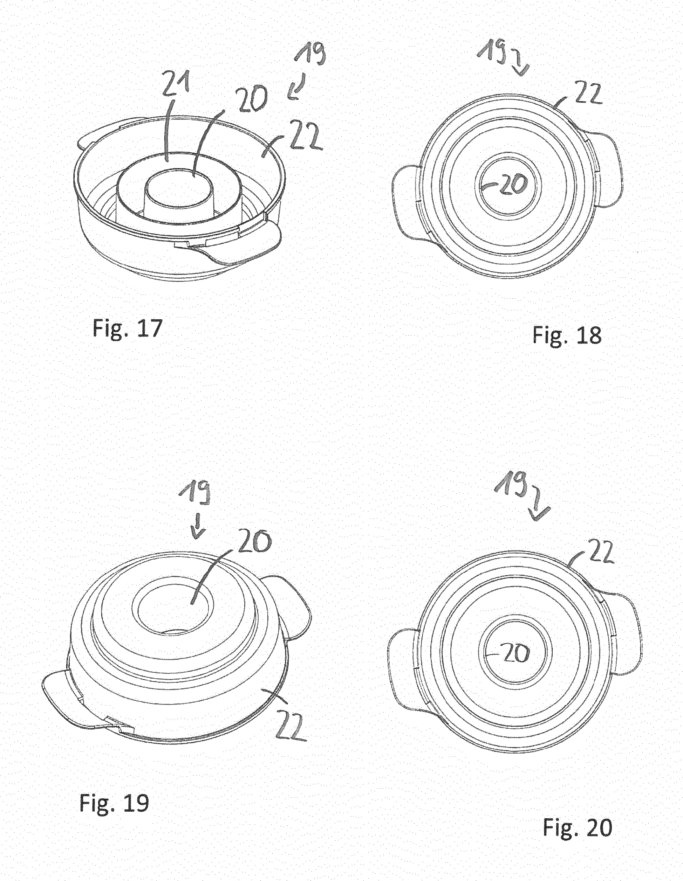

- Fig. 12 bis 20: den unteren Teil der Aufsatzvorrichtung in verschiedenen Ansichten.

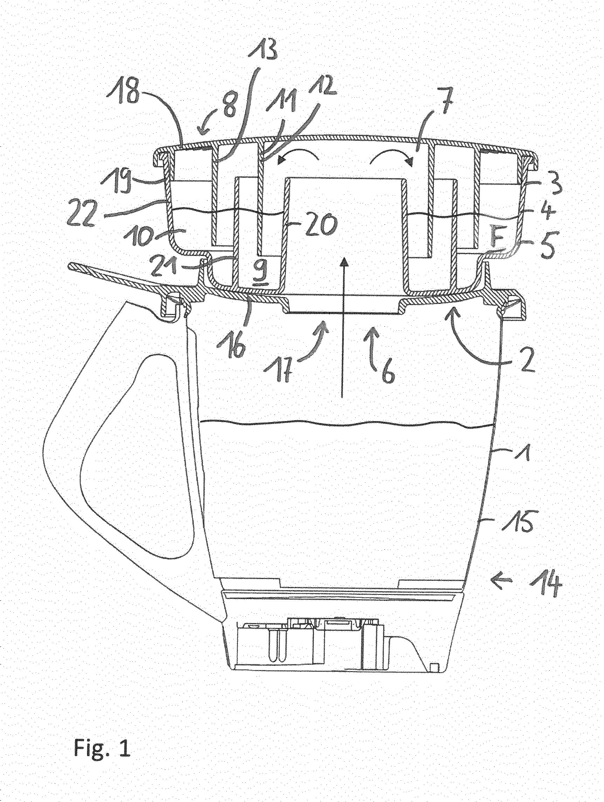

Figur 1 zeigt eine Topfanordnung gemäß der vorliegenden Erfindung. Der Topf 1 weist eine an einem unteren Topfende angeordnete Topfbasis 14, einen sich an die Topfbasis 14 anschließenden Topfmantel 15 und einen Topfdeckel 16 auf. Mit dem Topfdeckel 16 ist die Topföffnung 2 verschließbar. Der Topfdeckel 16 weist eine Einfüllöffnung 17 auf, welche einen geringeren Durchmesser als die Topföffnung 2 aufweist.

Somit zeigt Figur 1 also eine Topfanordnung, beispielsweise für eine Küchenmaschine, umfassend einen Topf 1 mit einer Topföffnung 2. Ferner umfasst die Topfanordnung eine Aufsatzvorrichtung 3, die dazu ausgebildet ist, auf die Topföffnung 2 aufgesetzt zu werden (in der Darstellung nach Fig. 1 ist die Aufsatzvorrichtung 3 auf einen die Topföffnung 2 teilweise verschließenden Topfdeckel 16 aufgesetzt). Die Aufsatzvorrichtung 3 weist eine Filtereinrichtung 4 zum Filtern von Stoffen, beispielsweise Dämpfen, Partikeln und/oder Geruchsstoffen auf. Die Filtereinrichtung 4 umfasst eine mit einem Filtermedium F befüllbare Filterkammeranordnung 5 (in Fig. 1 ist ein befüllter Zustand gezeigt), wobei die Filterkammeranordnung 5 eine Eintrittsöffnung 6 aufweist, die dazu ausgebildet ist, bei einer Verwendung der Topfanordnung in einer Kochanwendung, beispielsweise einem Kochvorgang eines in dem Topf 1 aufgenommenen Lebensmittels, bei der die Aufsatzvorrichtung 3 auf den Topf 1 aufgesetzt ist, Stoffe aus dem Topf 1 in einen durch die Filterkammeranordnung 5 gebildeten Filterraum 7 eintreten zu lassen und die Stoffe unter Einsatz des Filtermediums F zu filtern.

Die Figur 1 und/oder die weiteren Figuren zeigen, dass die Aufsatzvorrichtung 3 eine Druckausgleichsöffnung 8 aufweist, wobei die Druckausgleichsöffnung 8 bei auf den Topf 1 aufgesetzter Aufsatzvorrichtung 3 an einer der Topföffnung 2 gegenüberliegenden Seite der Aufsatzvorrichtung 3 angeordnet ist (vgl. insbesondere Fig. 1)

Die Figur 1 und/oder die weiteren Figuren zeigen, dass die Filterkammeranordnung 5 mehrere mit Filtermedium F befüllbare Filterkammern 9, 10 umfasst. Ferner zeigen die Figur 1 und/oder die weiteren Figuren, dass die Filterkammeranordnung 5 zwei konzentrisch um die Eintrittsöffnung 6 herum, und in Radialrichtung hintereinander angeordnete Filterkammern 9, 10 umfasst (vgl. insbesondere Fig. 1).

Die Figur 1 und/oder die weiteren Figuren zeigen, dass die Filterkammeranordnung 5 eine Leitvorrichtung 11 umfasst, die dazu eingerichtet ist, Stoffe aus dem Topf durch das Filtermedium F zu leiten.

Die Figur 1 und/oder die weiteren Figuren zeigen, dass die Aufsatzvorrichtung 3 durch ein oberes Teil 18 und ein unteres Teil 19 gebildet ist, wobei das untere Teil 19 die mindestens eine Filterkammer 9, 10 bereitstellt und das obere Teil 18 die Leitvorrichtung 11 bereitstellt. Bei der gezeigten Ausführungsvariante sind die Teile 18, 19 (oberes Teil 18 + unteres Teil 19) separate Bauteile.

Die Figur 1 und/oder die weiteren Figuren zeigen, dass die Leitvorrichtung 11 mindestens eine Leitwand 12, 13 umfasst, die in die mindestens eine Filterkammer 9, 10 hineinragt. Wie in Figur 1 gezeigt, weist die Leitvorrichtung 11 bei dieser Ausführungsform zwei Leitwände 12, 13 auf, die in Radialrichtung hintereinander und beabstandet zueinander angeordnet sind, wobei die Leitwände 12, 13 jeweils in Form eines ringförmigen Stegs (oder Mantels) an eine Oberseite des oberen Teils 18 angeformt (bzw. befestigt) sind. Die ringförmigen Stege ragen in den Filterraum 7 - und wie zuvor erwähnt in die mindestens eine Filterkammer 9, 10 - in Richtung des Topfes 1 hinein.

Die Figur 1 und/oder die weiteren Figuren zeigen, dass die mindestens eine Filterkammer 9, 10 Kammerwände 20, 21, 22 aufweist und die mindestens eine Leitwand 12, 13 zusammen mit den Kammerwänden 20, 21, 22 einen labyrinthartigen Weg für die Stoffe aus dem Topf 1 zwischen der Eintrittsöffnung 6 und der Druckausgleichsöffnung 8 vorgeben.

Die Eintrittsöffnung 6 ist nach unten einem Innenraum des Topfes 1 zugewandt. Die Eintrittsöffnung 6 verbindet den Innenraum des Topfes 1 mit dem Filterraum 7 bzw. den Filterkammern 9, 10. Die Druckausgleichsöffnungen 8 sind dem Innenraum des Topfes 1 abgewandt.

Die Eintrittsöffnung 6 ist bezogen auf die die Aufsatzvorrichtung 3 mittig bzw. zentriert angeordnet. Die Austrittsöffnung 8 ist bezogen auf die die Aufsatzvorrichtung 3 randseitig angeordnet.

Figur 1 zeigt ferner, dass die Eintrittsöffnung 6 der Aufsatzvorrichtung 3 fluchtend oder nahezu fluchtend zur Einfüllöffnung 17 des Topfdeckels 16 angeordnet ist.

## Patentansprüche

1. Topfanordnung, beispielsweise für eine Küchenmaschine, umfassend einen Topf (1) mit einer Topföffnung (2)
**gekennzeichnet durch** eine Aufsatzvorrichtung (3), die dazu ausgebildet ist, auf die Topföffnung (2) aufgesetzt zu werden, wobei die Aufsatzvorrichtung (3) eine Filtereinrichtung (4) zum Filtern von Stoffen, beispielsweise Dämpfen, Partikeln und/oder Geruchsstoffen aufweist,
die Filtereinrichtung (4) umfassend eine mit einem Filtermedium (F) befüllbare Filterkammeranordnung (5), wobei die Filterkammeranordnung (5) eine Eintrittsöffnung (6) aufweist, die dazu ausgebildet ist, bei einer Verwendung der Topfanordnung in einer Kochanwendung, beispielsweise einem Kochvorgang eines in dem Topf (1) aufgenommenen Lebensmittels, bei der die Aufsatzvorrichtung (3) auf den Topf (1) aufgesetzt ist, Stoffe aus dem Topf (1) in einen **durch** die Filterkammeranordnung (5) gebildeten Filterraum (7) eintreten zu lassen und die Stoffe unter Einsatz des Filtermediums (F) zu filtern.

2. Topfanordnung nach Anspruch 1,
**dadurch gekennzeichnet, dass**
die Aufsatzvorrichtung (3) eine Druckausgleichsöffnung (8) aufweist, wobei die Druckausgleichsöffnung (8) bei auf den Topf (1) aufgesetzter Aufsatzvorrichtung (3) vorzugsweise an einer der Topföffnung (2) gegenüberliegenden Seite der Aufsatzvorrichtung (3) angeordnet ist.

3. Topfanordnung nach einem der vorangehenden Ansprüche,
**dadurch gekennzeichnet, dass**
die Filterkammeranordnung (5) mindestens eine, vorzugsweise mehrere, mit Filtermedium (F) befüllbare Filterkammer (9, 10) umfasst.

4. Topfanordnung nach Anspruch 3,
**dadurch gekennzeichnet, dass**
die Filterkammeranordnung (5) zwei konzentrisch um die Eintrittsöffnung (6) herum, und vorzugsweise in Radialrichtung hintereinander angeordnete Filterkammern (9, 10) umfasst.

5. Topfanordnung nach einem der vorangehenden Ansprüche,
**dadurch gekennzeichnet,**
**dass** das Filtermedium (F) eine Flüssigkeit, ein Feststoff, ein Gel, oder eine Paste ist.

6. Topfanordnung nach einem der vorangehenden Ansprüche,
**dadurch gekennzeichnet, dass**
die Filterkammeranordnung (5) eine Leitvorrichtung (11) umfasst, die dazu eingerichtet ist, Stoffe aus dem Topf durch das Filtermedium (F) zu leiten.

7. Topfanordnung nach einem der vorangehenden Ansprüche,
**dadurch gekennzeichnet, dass**
die Aufsatzvorrichtung (3) durch ein oberes Teil (18) und ein unteres Teil (19) gebildet ist, wobei das untere Teil (19) die mindestens eine Filterkammer (9, 10) bereitstellt und das obere Teil (18) die Leitvorrichtung (11) bereitstellt.

8. Topfanordnung nach Anspruch 7,
**dadurch gekennzeichnet, dass**
das obere Teil (18) und das untere Teil (19) separate Bauteile sind, oder dass das obere Teil (18) und das untere Teil (19) ein einteilig gefertigtes Bauteil bereitstellen.

9. Topfanordnung nach einem der vorangehenden Ansprüche,
**dadurch gekennzeichnet, dass**
die Leitvorrichtung (11) mindestens eine Leitwand (12, 13) umfasst, die in die mindestens eine Filterkammer (9, 10) hineinragt.

10. Topfanordnung nach einem der vorangehenden Ansprüche,
**dadurch gekennzeichnet, dass**
die mindestens eine Filterkammer (9, 10) Kammerwände (20, 21, 22) aufweist und die mindestens eine Leitwand (12, 13) zusammen mit den Kammerwänden (20, 21, 22) einen labyrinthartigen Weg für die Stoffe aus dem Topf (1) zwischen der Eintrittsöffnung (6) und der Druckausgleichsöffnung (8) vorgeben.

11. Küchenmaschine mit einer Topfanordnung nach einem der vorangehenden Ansprüche.
